# EUROPÄISCHE PATENTANMELDUNG

(11) **EP 0 790 497 A1**
(43) Veröffentlichungstag der Anmeldung: **20.08.1997**
(21) Anmeldenummer: 97100969.1
(22) Anmeldetag: 22.01.1997
(51) Int. Cl.: G01N 21/74

(54) **Elektrothermische Atomisierungseinrichtung für die analytische Spektrometrie**

(30) Priorität: 01.02.1996 DE 19603643
(71) Anmelder: BODENSEEWERK PERKIN-ELMER GMBH, D-88662 Überlingen (DE)
(72) Erfinder: Gilmutdinov, Albert Kh., Prof., Kazan 420043 (RU); Sperling, Michael, Dr., 78354 Sipplinger (DE); Welz, Bernard, Dr., 88690 Uhldingen (DE)
(74) Vertreter: Grünecker, Kinkeldey, Stockmair & Schwanhäusser Anwaltssozietät

(57) **Zusammenfassung**

Die Erfindung betrifft eine Atomisierungseinrichtung zum Überführen eines Analyten einer zu untersuchenden Probe in den atomisierten Zustand mit einem elektrisch beheizbaren hohlkörperförmigen Ofen mit einer sekundären Oberfläche (50), auf der ein Analyt einer zu untersuchenden Probe kondensierbar ist, bevor er für die Untersuchung in den atomisierten Zustand überführt wird. Diese Atomisierungseinrichtung zeichnet sich dadurch aus, daß der Ofen einen ersten Abschnitt (10) und einen zweiten Abschnitt (20) aufweist, die getrennt voneinander elektrisch aufheizbar sind, wobei die sekundäre Oberfläche (50) durch eine Fläche des ersten Abschnitts (10) gebildet ist. Außerdem betrifft die Erfindung ein Verfahren zur Atomisierung eines Analyten einer zu untersuchenden Probe unter Verwendung der erfindungsgemäßen Vorrichtung mit den Schritten: Einbringen der Probe in einen hohlkörperförmigen Ofen mit einer sekundären Oberfläche, Kondensieren des Analyten auf die sekundäre Oberfläche, und Atomisieren des Analyten.

## Beschreibung

Die Erfindung betrifft eine Atomisierungseinrichtung zum Überführen eines Analyten einer zu untersuchenden Probe in den atomisierten Zustand mit einem elektrisch beheizbaren hohlkörperförmigen Ofen mit einer sekundären Oberfläche, auf der ein Analyt einer zu untersuchenden Proben kondensierbar ist, bevor er für die Untersuchung in den atomisierten Zustand überführt wird.

Weiterhin betrifft die Erfindung ein Verfahren zur Atomisierung eines Analyten einer zu untersuchenden Probe mit den Schritten: Einbringen der Probe in einen hohlkörperförmigen Ofen mit einer sekundären Oberfläche, Kondensieren des Analyten auf die sekundäre Oberfläche und Atomisieren des Analyten.

Eine derartige Vorrichtung und ein derartiges Verfahren sind aus der Veröffentlichung "Electrothermal atomic absorption spektrometry by reatomization from a second trapping surface" von P. Hocquellet in Spectrochimica Acta, 47B, Seiten 719-729, 1992, oder auch aus T.M. Rettberg und J.A. Holcombe, Spectrochimica Acta, 41B, Seiten 377-389, 1986, bekannt.

Die bekannte Atomisierungseinrichtung ist in Fig. 4 gezeigt. Sie umfaßt einen beheizbaren rohrförmigen Ofen 1 aus Graphit, in dem ein zusätzliches Element 60 aus Graphit vorgesehen ist, das eine gewölbeförmige Oberfläche 50 aufweist. Auf diese gewölbeförmige Oberfläche, die sog. sekundäre Oberfläche, ist ein Analyt einer zu untersuchenden Probe kondensierbar. Der bekannte Ofen wird dadurch aufgeheizt, daß durch vorgesehene Kontaktstücke (nicht gezeigt) ein Strom in Längsrichtung durch den rohrförmigen Teil des Ofens geschickt wird. Beim Aufheizen des Ofens wird der Analyt atomisiert und auf der sekundären Oberfläche kondensiert. Erreicht die sekundäre Oberfläche die Temperatur der Ofenatmosphäre, wird der Analyt reatomisiert.

Durch eine derartige Anordnung und ein derartiges Verfahren lassen sich aufgrund der Umverteilung des Analyten die Matrixeffekte während der Atomisierung signifikant reduzieren. Weiterhin beruht, bedingt durch die Kondensierung des Analyten auf der sekundären Oberfläche, die Reatomisierung des Analyten im wesentlichen auf der Desorption von der Oberfläche. Damit ist diese Atomisierung im wesentlichen unabhängig von der ursprünglichen Probenzusammensetzung.

Aufgabe der Erfindung ist es, die bekannte Vorrichtung und das bekannte Verfahren derart zu verbessern, daß verbesserte Untersuchungsergebnisse erhalten werden können.

Diese Aufgabe wird für eine Vorrichtung der eingangs genannten Art dadurch gelöst, daß der Ofen einen ersten und einen zweiten Abschnitt aufweist, die getrennt voneinander elektrisch aufheizbar sind, wobei die sekundäre Oberfläche durch eine Fläche des ersten Abschnitts gebildet ist.

Hierdurch wird eine getrennte, genaue Temperatursteuerung der beiden Abschnitte des Ofens ermöglicht, und zwar sowohl bezüglich der Heizraten als auch der jeweiligen Endtemperaturen. Damit kann das Heizprogramm den analytischen Bedürfnissen optimal angepaßt werden.

Insbesondere kann durch diese Ausbildung die Temperatur der Gasphase und der Oberflächen des Atomisators wesentlich besser gesteuert werden. Durch die getrennte Steuerung der sekundären Oberfläche kann die zeitliche Verzögerung der Aufheizung der Atomisierungsoberfläche unabhängig von der angestrebten Endtemperatur gesteuert werden.

Weiterhin kann durch die getrennte Steuerung die Temperaturdifferenz zwischen den beiden Abschnitten im Gegensatz zur passiven Funktion der sekundären Oberfläche im Stand der Technik gesteuert werden.

Außerdem erhält man dadurch, daß der erste und der zweite Abschnitt getrennt aufheizbar sind, eine Kontrolle über die Heizraten. Die Notwendigkeit, einen konstruktionsbedingten Kompromiß zwischen Heizrate und Verzögerung eingehen zu müssen, wie das bei Systemen mit Plattformen der Fall ist, entfällt bei diesem System. Insbesondere bei der Atomisierung des Analyten von der sekundären Oberfläche können dadurch auch erhöhte Heizraten und damit eine verbesserte Empfindlichkeit bei reduzierten Gasphaseninterferenzen erzielt werden.

Gemäß einer bevorzugten Ausführungsform der Erfindung ist die sekundäre Oberfläche als Innenwandabschnitt des hohlkörperförmigen Ofens ausgebildet.

Dies hat den zusätzlichen Vorteil, daß die Atomisierungseinrichtung mit geringem Aufwand hergestellt werden kann.

Vorzugsweise können der erste und der zweite Abschnitt Kontaktelemente aufweisen, durch die dem hohlkörperförmigen Ofen elektrischer Strom zuführbar ist.

Insbesondere können hierzu ein gemeinsames Kontaktelement für beide Abschnitte sowie zwei voneinander elektrisch isolierte Kontaktelemente für jeden Abschnitt vorgesehen sein.

Eine derartige Anordnung hat den Vorteil, daß die Atomisierungseinrichtung in bekannten Atomabsorptionsspektrometern verwendet werden kann, ohne diese, abgesehen von der Stromzuführung und der Steuereinheit für die Stromzuführung, ändern zu müssen.

Vorzugsweise wird der hohlkörperförmige Ofen aus Graphit gebildet. Dieses Material stellt sicher, daß der Ofen durch Stromzufuhr direkt und mit sehr kurzem Ansprechverhalten heizbar ist.

Gemäß einer besonderen Ausführungsform kann der hohlkörperförmige Ofen rohrförmig ausgebildet sein. Hierzu eignet es sich insbesondere, die beiden Abschnitte halbrohrförmig auszubilden. Diese beiden halbrohrförmigen Abschnitte können dann zu einem rohrförmigen Körper zusammengesetzt werden, wobei die Kontaktstücke der beiden Halbrohre auf mindestens einer Seite gegeneinander isoliert sind.

Gemäß einer besonderen Ausführungsform wird bei einem querbeheizten rohrförmigen Ofen das Ofenrohr auf einer Kontaktseite in Längsrichtung geschlitzt ausgebildet, in dem so gebildeten Schlitz Isoliermaterial vorgesehen und die auf beiden Seiten des Schlitzes liegenden Ofenrohrwandungen mit getrennten elektrischen Kontakten verbunden.

Als geeigneter Isolator lassen sich hierfür pyrolythischer Graphit, indem die Anisotropie des Materials in geeigneter Weise benutzt wird, oder keramische Materialien einsetzen.

Diese besonderen Ausführungsformen ermöglichen es, den hohlkörperförmigen Ofen mit geringen Kosten herzustellen. Weiterhin kann der Ofen in einer derartigen Ausführung problemlos in bekannten Atomabsorptionspektrometern eingesetzt werden.

Gemäß einer weiteren besonderen Ausführungsform kann in dem ersten Abschnitt des Ofens eine Dosieröffnung vorgesehen werden. Dadurch ist es möglich, die Probe auf die Fläche, die der sekundären Fläche gegenüberliegt, aufzubringen.

Hierdurch wird eine für die Atomisierung optimale Verteilung des Analyten auf der sekundären Oberfläche erzielt.

Gemäß einer weiteren Ausführungsform der Erfindung kann das eingangs genannte Verfahren derart durchgeführt werden, daß ein hohlkörperförmiger Ofen vorgesehen wird, der einen ersten und einen zweiten Abschnitt aufweist, die von einander getrennt elektrisch aufheizbar sind, wobei die sekundäre Oberfläche durch eine Fläche des ersten Abschnitts gebildet wird, daß nach dem Aufbringen des Analyten auf eine Fläche des zweiten Abschnitts dieselbe elektrisch aufgeheizt wird, so daß ein Transfer des Analyten über die Gasphase auf die sekundäre Oberfläche erfolgt, wobei die sekundäre Oberfläche auf einer Temperatur gehalten wird, die eine Kondensation des Analyten auf der sekundären Oberfläche ermöglicht, und daß nach dem Transfer der erste Abschnitt im wesentlichen auf die Temperatur des zweiten Abschnitts elektrisch aufgeheizt wird, wodurch der auf der sekundären Oberfläche kondensierte Analyt desorbiert und atomisiert wird.

Ein wesentliches Merkmal dieses Verfahrens besteht darin, die sekundäre Oberfläche des ersten Abschnitts sowie den zweiten Abschnitt unabhängig voneinander zu heizen. Dies führt dazu, daß die zeitliche Verzögerung der Aufheizung der Atomisierungsoberfläche, die Kontrolle über die Temperaturdifferenz zwischen der Fläche, auf welcher der Analyt aufgebracht ist, und der sekundären Fläche, auf die er kondensiert werden soll sowie die Heizrate genau zu steuern. Hierdurch kann das Verfahren zur Atomisierung den gegebenen Eigenschaften der nachzuweisenden Analyten wesentlich besser als in den bekannten Verfahren angepaßt werden. Dies führt zur Reduktion von Matrixeffekten während der Atomisierung und insgesamt zu einer höheren Empfindlichkeit bei reduzierten Gasphaseninterferenzen. Insgesamt lassen sich mit diesem Verfahren also geringere Analytenmengen nachweisen.

Gemäß einer besonderen Ausführungsform des Verfahrens wird der Analyt nach dem Aufbringen auf den zweiten Abschnit dadurch getrocknet, daß beide Abschnitte auf im wesentlichen die gleiche Temperatur aufgeheizt werden. Führt man diese Aufheizung synchron mit gleicher Temperatur durch, kann eine Kondensation von Lösemitteln oder groben Bestandteilen an den Oberflächen des Atomisators vermieden werden. Dies verbessert insbesondere die Ergebnisse beim Nachweis von Analyten, die in Proben mit derartigen Komponenten vorkommen.

Gemäß einer weiteren Ausführungsform wird der Analyt nach dem Aufbringen auf den zweiten Abschnitt dadurch getrocknet, daß der erste Abschnitt auf eine Temperatur gebracht wird, die über der des zweiten Abschnitts liegt, so daß der erste Abschnitt als Oberflächenstrahler eingesetzt wird. Dadurch können Proben eingedampft werden, die bei direktem Erhitzen unregelmäßig verdampfen oder zu Analytverlusten führen. Dieser Verfahrensschritt reduziert bei solchen Proben die Analytverluste und führt demnach zu genaueren Meßergebnissen.

Im folgenden wird die Erfindung näher anhand von in der Zeichnung dargestellten vorzugsweisen Ausführungsbeispielen erläutert. In der Zeichnung zeigen:
- Fig. 1: einen Querschnitt durch eine Atomisierungseinrichtung gemäß einer ersten Ausführungsform der Erfindung;
- Fig. 2: einen Querschnitt durch eine Atomisierungseinrichtung gemäß einer zweiten Ausführungsform der Erfindung;
- Fig. 3: ein Diagramm zur Erläuterung eines Verfahrens gemäß einer Ausführungsform der Erfindung; und
- Fig. 4: eine Atomisierungseinrichtung gemäß dem Stand der Technik.

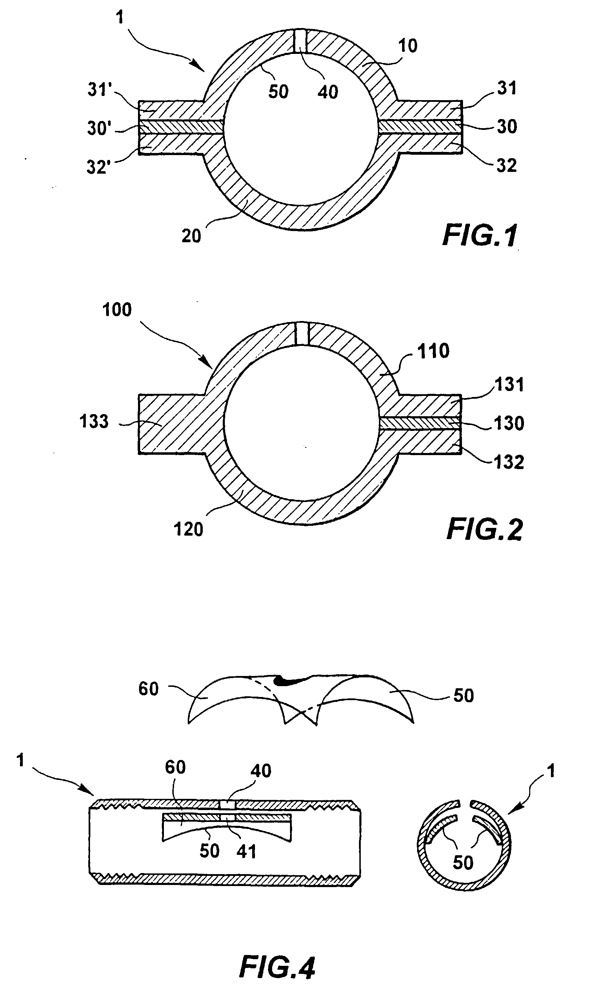

In Fig. 1 ist mit dem Bezugszeichen 1 ein elektrisch beheizbarer rohrförmiger Ofen im Querschnitt gezeigt. Dieser rohrförmige Ofen umfaßt einen ersten Abschnitt 10 und einen zweiten Abschnitt 20. Diese beiden Abschnitte, die gemäß Fig. 1 halbrohrförmig ausgebildet sind, sind durch einen Isolator 30 bzw. 30' voneinander getrennt.

An den ersten habrohrförmigen Abschnitt 10 schließen sich radial nach außen Kontaktstücke 31 und 31' an. In gleicher Weise schließen sich an den zweiten Abschnitt 20 Kontaktstücke 32 und 32' an. Diese Kontaktstücke 31 und 31' bzw. 32 und 32' sind an getrennte Stromversorgungen (nicht gezeigt) angeschlossen, so daß durch die Abschnitte 10 bzw. 20 ein Strom, der ein Aufheizen der Abschnitte 10 bzw. 20 bewirkt, geführt werden kann.

Die Stromversorgung für die beiden Abschnitte kann programmierbar ausgebildet werden, so daß eine automatische und reproduzierbare Steuerung bezüglich Temperatur, Zeit und Heizraten ermöglicht wird.

Weiter können verschiedene programmierbare Gaseinlässe (nicht gezeigt), welche das Einleiten unterschiedlicher Gase während der Schritte des Heizprogramms in den Ofen sowie ein Umströmen des Ofens erlauben, vorgesehen werden. Derartige Gaseinlässe sind beispielsweise aus der EP-A-0350722 bekannt.

Der erste Abschnitt 10 umfaßt weiterhin eine Dosieröffnung 40. Durch diese Dosieröffnung kann mit Hilfe einer Dosierkapillare oder eines Dosierautomaten (nicht gezeigt) eine Probe, die meist in flüssiger Form vorliegt, in den Ofen eingeführt werden.

Durch die in Fig. 1 gezeigte Ausführungsform wird der Strom quer zur Längsachse des Ofens geführt; der Ofen also in Querrichtung geheizt. Dadurch werden Temperaturgradienten über die Länge des rohrförmigen Atomisators vermieden. Die Kontaktstücke können insbesondere derart ausgebildet werden, daß eine möglichst gleichmäßige Aufheizung des ersten Abschnitts 10 (bzw. des zweiten Abschnitts 20) erzielt wird. Spezielle Ausgestaltungen zur Vermeidung derartiger Temperaturgradienten und zur Sicherstellung einer gleichmäßigen Aufheizung sind beispielsweise aus der EP-B-0381948 bekannt.

Die Abschnitte 10 bzw. 20 werden aus einem leitenden Material, wie beispielsweise Graphit oder Wolfram, hergestellt. Als Isolator kommt insbesondere pyrolythischer Graphit zum Einsatz, wobei die Anisotropie dieses Materials in geeigneter Weise benutzt wird. Alternativ können auch keramische Materialien als Isolatoren verwendet werden.

In Fig. 2 ist eine weitere Ausführungsform des erfindungsgemäßen Ofens 100 gezeigt. Im Gegensatz zu Fig. 1 weisen der erste Abschnitt 110 und der zweite Abschnitt 120 ein gemeinsames Kontaktstück 133 auf. Auf der diesem Kontaktstück gegenüberliegenden Seite sind, wie bei der Ausführungsform gemäß Fig. 1, zwei Kontaktstücke 131 bzw. 132 für den ersten Abschnitt 110 bzw. den zweiten Abschnitt 120 vorgesehen. In dieser Ausführungsform muß von der linken Seite nur eine einzige Stromzuführung vorgesehen werden. Im übrigen entspricht der Ofen dem in Fig. 1 dargestellten.

Neben den in den Figuren 1 und 2 dargestellten rohrförmigen Öfen mit den Abschnitten 10 und 20 können auch andersartig ausgebildete Öfen verwendet werden. Demnach können zum einen zwei beliebig geformte Abschnitte verwendet werden, die wenn sie zusammengesetzt sind, einen rohrförmigen Ofenkörper ergeben und unabhängig voneinander geheizt werden können. Zum anderen ist es auch möglich, andere Hohlkörperformen einzusetzen.

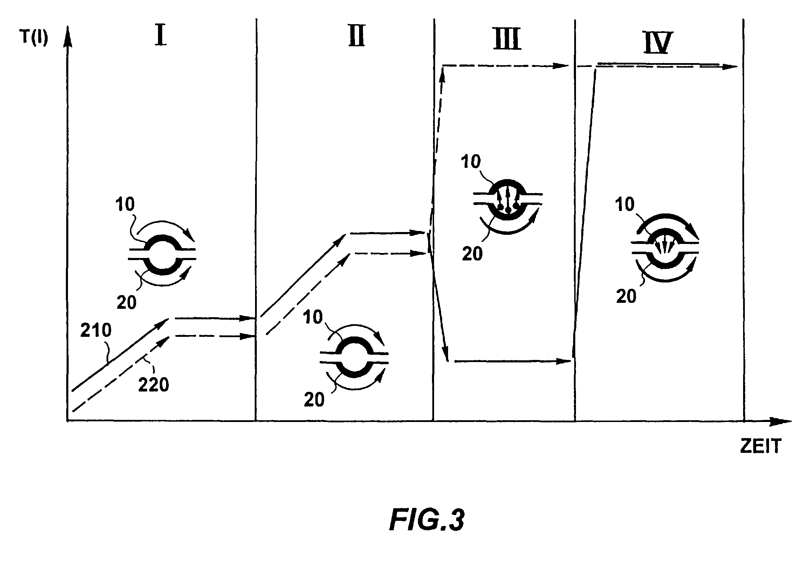

In Fig. 3 ist ein Diagramm zur Erläuterung eines Verfahrens zur Atomisierung eines Analyten einer zu untersuchenden Probe, das in einem Ofen gemäß Fig. 1 oder 2 eingesetzt werden kann, dargestellt.

In diesem Diagramm sind in horizontaler Richtung die Zeit und in vertikaler Richtung die Temperatur dargestellt. Die Zeitachse ist in vier Bereiche I, II, III und IV eingeteilt. Diese Bereiche stellen verschiedene Prozeßschritte, nämlich die Trocknung, die Veraschung, die Umverteilung und die Atomisierung in dem erfindungsgemäßen Verfahren dar.

Für jeden dieser Prozeßschritte ist die Temperatur (ausgezogene Pfeile 210) des ersten Abschnitts 10 und die Temperatur (gestrichelte Pfeile 220) des zweiten Abschnitts 20 dargestellt. Weiterhin ist für jeden Bereich der Ofen schematisch durch seine beiden Abschnitte 10 und 20 dargestellt, wobei für jeden Bereich der Stromfluß durch den ersten Abschnitt 10 sowie durch den zweiten Abschnitt 20 schematisch durch Pfeile 310 und 320 angedeutet ist. Hierbei spiegelt die Dicke der Pfeile 310 und 320 den Stromfluß durch den jeweiligen Abschnitt wieder.

Nachdem die zu analysierende Probe in geeigneter Weise auf die innere Seite des zweiten Abschnitts 20 durch die Dosieröffnung 40 (beispielsweise mittels eines Probeautomaten) aufgebracht worden ist, wird in Schritt I die Probe durch programmierte Aufheizung des ersten Abschnitts 10 und des zweiten Abschnitts 20 getrocknet und pyrolisiert. Gemäß Fig. 3 wird hierzu der erste Abschnitt 10 etwas stärker als der zweite Abschnitt 20 aufgeheizt. In diesem Fall wirkt der erste Abschnitt 10 als Oberflächenstrahler, mit dem Proben eingedampft werden können, welche bei direktem Erhitzen unregelmäßig verdampfen oder zu Analytverlusten führen.

Neben dem dargestellten Trockenprozeß können auch andere Aufheizraten, abgestimmt auf den jeweiligen nachzuweisenden Analyten, eingesetzt werden. Beispielsweise können beide Abschnitte synchron und mit gleicher Temperatur aufgeheizt werden, um eine Kondensation von Lösungsmitteln oder Probenbestandteilen an den Oberflächen des Atomisators zu vermeiden.

Nach dem Aufheizen werden die Temperaturen des ersten Abschnitts und des zweiten Abschnitts auf einem konstanten Wert gehalten, bis die Trockenphase abgeschlossen ist.

In Schritt II wird die Probe verascht. Hierzu werden der erste Abschnitt 10 und der zweite Abschnitt 20 ähnlich wie im Schritt I aufgeheizt und bis zum Abschluß der Pyrolyse auf konstanter Temperatur gehalten.

In den Schritten I und II kann ein Gas durch den Ofen geführt werden, so daß Stoffe, die beim Trocknen und Pyrolisieren entstehen, abgeführt werden.

An diese beiden Heizschritte schließt sich Schritt III an. In diesem Schritt wird die Probe thermisch aufgeschlossen und der nachzuweisende Analyt wird über die Gasphase von dem zweiten Abschnitt 20 auf den ersten Abschnitt 10 umverteilt. Hierzu wird der zweite Abschnitt 20 sehr schnell auf eine zur Atomisierung geeignete Temperatur aufgeheizt. Der erste Abschnitt 10 wird entweder auf der vorherigen Vorbehandlungstemperatur belassen oder, wie in Fig. 3 gezeigt, auf eine niedrigere Temperatur abgesenkt. Aufgrund der wesentlich kälteren Oberfläche des Abschnitts 10 kondensiert der Analyt auf der sekundären Oberfläche 50 dieses Abschnitts.

Die Temperaturdifferenz zwischen dem oberen und unteren Abschnitt kann den Eigenschaften des Analyten und der Probenmatrix in einer kontrollierten Weise angepaßt werden. Während des Schritts III wird der Gasstrom durch den Ofen unterbrochen, so daß am Ende des Schritts III der Analyt quantitativ auf der sekundären Fläche 50 des ersten Abschnitts 10 niedergeschlagen ist.

Durch den Übertragungsschritt III wird die ursprüngliche Probe über eine weit größere aktive Oberfläche verteilt und die ursprüngliche Probenstruktur, beispielsweise im genannten Fall eine kristalline Probenstruktur, zerstört. Als Konsequenz wird die sich anschließende Atomisierung des Analyten von der sekundären Oberfläche 20 aus in hohem Umfang von der ursprünglichen Probenmatrix unabhängig.

Dem Schritt III schließt sich der eigentliche Atomisierungsschritt IV an. In diesem Schritt wird der erste Abschnitt 10 möglichst schnell auf die angestrebte Atomisierungstemperatur gebracht. Der auf der sekundären Oberfläche 50 des Abschnitts 10 niedergeschlagene Analyt desorbiert dabei von der Oberfläche und wird in die von dem zweiten Abschnitt 20 vorgeheizte Gasatmosphäre überführt.

Selbstverständlich kann auch in diesem Schritt der Gasstrom, entsprechend der erforderlichen Empfindlichkeit reduziert oder unterbrochen werden.

In Schritt IV kann in bekannter Weise eine Atomabsoptionsspektroskopiemessung durchgeführt werden.

Nachdem die Messung beendet ist, werden die Restprodukte der Atomisierung aus dem Ofen durch Ausheizen entfernt. Hierzu wird wiederum ein Gasstrom durch den Ofen geleitet.

In der folgenden Tabelle ist ein typisches Beispiel einer Steuerung nach dem erfindungsgemäßen Verfahren angegeben.

**Tabelle**

| Schritt | Temperatur (°C) | Aufheizen (s) | Halten (s) | Gasströmung | Detektion |
|---|---|---|---|---|---|
| I: Probentrocknung | Abschnitt 20: 110 | 5 | 10 | voll | - |
| | Abschnitt 10: 250 | | | | |
| II: Veraschung | Abschnitt 20: 500 | 15 | 10 | voll | - |
| | Abschnitt 10: 500 | | | | |
| III: Umverteilung | Abschnitt 20: 1800 | 0 | 0,5 | keine | - |
| | Abschnitt 10: 300 | | | | |
| IV: Atomisierung | Abschnitt 20: 1800 | 0 | 3 | keine | aktiv |
| | Abschnitt 10: 1800 | | | | |
| Ausheizen | Abschnitt 20: 2400 | 1 | 3 | voll | - |
| | Abschnitt 10: 2400 | | | | |

## Patentansprüche

1. Atomisierungseinrichtung zum Überführen eines Analyten einer zu untersuchenden Probe in den atomisierten Zustand mit
einem elektrisch beheizbaren hohlkörperförmigen Ofen (1; 100) mit einer sekundären Oberfläche (50), auf der ein Analyt einer zu untersuchenden Probe kondensierbar ist, bevor er für die Untersuchung in den atomisierten Zustand überführt wird,
**dadurch gekennzeichnet**, daß
der Ofen einen ersten Abschnitt (10; 110) und einen zweiten (20; 120) Abschnitt aufweist, die getrennt voneinander elektrisch aufheizbar sind, wobei die sekundäre Oberfläche (50) durch eine Fläche des ersten Abschnitts (10; 110) gebildet ist.

2. Atomisierungseinrichtung nach Anspruch 1, in welcher die sekundäre Oberfläche (50) als Innenwandabschnitt des hohlkörperförmigen Ofens (1) ausgebildet ist.

3. Atomisierungseinrichtung nach Anspruch 1 oder 2, in welcher der erste Abschnitt (10; 110) und der zweite Abschnitt (20; 120) mit Kontaktelementen (31, 31', 32, 32'; 131, 132, 133) in Verbindung stehen, durch die dem hohlkörperförmigen Ofen (1; 100) elektrischer Strom zuführbar ist.

4. Atomisierungseinrichtung nach Anspruch 3, in welcher ein gemeinsames Kontaktelement (133) für beide Abschnitte (110, 120) sowie zwei voneinander elektrisch isolierte Kontaktelemente (131, 132) für jeden Abschnitt (110, 120) vorgesehen sind.

5. Atomisierungseinrichtung nach einem der vorangegangenen Ansprüche, in welcher der hohlkörperförmige Ofen (1; 100) aus Graphit gebildet ist.

6. Atomisierungsvorrichtung nach einem der vorangegangen Ansprüche, in welcher der hohlkörperförmige Ofen rohrförmig ausgebildet ist.

7. Atomisierungseinrichtung nach Anspruch 6, in welcher beide Abschnitte (10, 20; 110, 120) die Form eines Halbrohres aufweisen.

8. Atomisierungseinrichtung nach Anspruch 7, in welcher beide halbrohrförmigen Abschnitte zur voneinander unabhängigen Heizung über wenigstens einen Isolator (30; 130) miteinander verbunden sind.

9. Atomisierungseinrichtung nach Anspruch 8, in welcher der Isolator (30) pyrolytischen Graphit oder keramische Materialien umfaßt.

10. Atomisierungseinrichtung nach einem der Ansprüche 6 bis 9, in welcher der rohrförmige Ofen quer zu seiner Längsrichtung beheizbar ist.

11. Atomisierungseinrichtung nach einem der vorangegangenen Ansprüche, in welcher der erste Abschnitt eine Dosieröffnung (40) umfaßt.

12. Verfahren zur Atomisierung eines Analyten einer zu untersuchenden Probe mit den Schritten:
Einbringen der Probe in einen hohlkörperförmigen Ofen mit einer sekundären Oberfläche,
Kondensieren des Analyten auf die sekundäre Oberfläche, und
Atomisieren des Analyten,
**dadurch gekennzeichnet**, daß
ein hohlkörperförmiger Ofen vorgesehen wird, der einen ersten und einen zweiten Abschnitt aufweist, die voneinander getrennt elektrisch aufheizbar sind, wobei die sekundäre Oberfläche durch eine Fläche des ersten Abschnitts gebildet wird,
daß nach dem Aufbringen des Analyten auf eine Fläche des zweiten Abschnitts dieselbe elektrisch aufgeheizt wird, so daß ein Transfer des Analyten über die Gasphase auf die sekundäre Oberfläche erfolgt, wobei die sekundäre Oberfläche auf einer Temperatur gehalten wird, die eine Kondensation des Analyten auf der sekundären Oberfläche ermöglicht, und
daß nach dem Transfer der erste Abschnitt im wesentlichen auf die Temperatur des zweiten elektrisch aufgeheizt wird, wodurch der auf der sekundären Oberfläche kondensierte Analyt desorbiert und atomisiert wird.

13. Verfahren nach Anspruch 12, in welchem der Analyt nach dem Aufbringen auf den zweiten Abschnitt dadurch getrocknet wird, daß beide Abschnitte auf im wesentlichen die gleiche Temperatur aufgeheizt werden.

14. Verfahren nach Anspruch 13, in welchem beide Abschnitte synchron mit gleicher Temperatur aufgeheizt werden.

15. Verfahren nach Anspruch 12, in welchem der Analyt nach dem Aufbringen auf den zweiten Abschnitt dadurch getrocknet wird, daß der erste Abschnitt auf eine Temperatur gebracht wird, die über der Temperatur des zweiten Abschnitts liegt, so daß der erste Abschnitt als Oberflächenstrahler eingesetzt wird.
